# EUROPÄISCHE PATENTANMELDUNG

(11) **EP 3 603 454 A1**
(43) Veröffentlichungstag der Anmeldung: **05.02.2020**
(21) Anmeldenummer: 19000351.7
(22) Anmeldetag: 30.07.2019
(51) Int. Cl.: A47C 1/12, A47C 7/00, A47C 7/62, A47C 1/023, B60N 2/07

(54) **MECHANISCHE ANTRIEBSVORRICHTUNG FÜR EINEN STUHL**

(30) Priorität: 03.08.2018 DE 102018006134
(71) Anmelder: Trendelkamp, Josef, 48149 Münster (DE)
(72) Erfinder: Trendelkamp, Josef, 48149 Münster (DE)
(74) Vertreter: Steffen, Andreas

(57) **Zusammenfassung**

Die vorliegende Erfindung betrifft eine mechanische Antriebsvorrichtung (1) für einen verfahrbaren Stuhl (2), der aus einer Ausgangsposition A in Richtung einer zu der Ausgangsposition unterschiedlichen Position E verfahren werden kann, wobei beim Verfahren des Stuhles (2) die Antriebsvorrichtung (1) derart kraftbeaufschlagt wird, dass durch die Positionsänderung des Stuhles eine auf die Antriebsvorrichtung (1) wirkende Rückstellkraft aufgebaut wird, wobei die Rückstellkraft entgegen der Verfahrrichtung von der Ausgangsposition A in die unterschiedliche Position E wirkt, so dass mittels der auf die Antriebsvorrichtung (1) wirkenden Rückstellkraft der Stuhl (2) aus der unterschiedlichen Position E selbsttätig in die Ausgangsposition A zurück fährt.

Erfindungswesentlich ist vorgesehen, dass die Antriebsvorrichtung (1) im Stuhl (2) verbaut ist.

## Beschreibung

Die vorliegende Erfindung betrifft eine mechanische Antriebsvorrichtung für einen verfahrbaren Stuhl, der aus einer Ausgangsposition A in Richtung einer zu der Ausgangsposition unterschiedlichen Position E verfahren werden kann, wobei beim Verfahren des Stuhles die Antriebsvorrichtung derart kraftbeaufschlagt wird, dass durch die Positionsänderung des Stuhles eine auf die Antriebsvorrichtung wirkende Rückstellkraft aufgebaut wird, wobei die Rückstellkraft entgegen der Verfahrrichtung von der Ausgangsposition A in die unterschiedliche Position E wirkt, so dass mittels der auf die Antriebsvorrichtung wirkenden Rückstellkraft der Stuhl aus der unterschiedlichen Position E selbsttätig In die Ausgangsposition A zurück fährt nach dem Oberbegriff von Anspruch 1, einen Stuhl mit der erfindungsgemäßen Antriebsvorrichtung nach Anspruch 9, einen Stuhl mit der erfindungsgemäßen Antriebsvorrichtung nach Anspruch 10 sowie die Verwendung der mechanischen Antriebsvorrichtung für einen selbstständig verfahrbaren Stuhl nach Anspruch 11.

Aus dem Stand der Technik sind Stuhlführungsvorrichtungen bekannt, die zur Abstützung und zur beweglichen Führung eines Stuhles, beispielsweise für Sitzungssäle von öffentlichen Gebäuden verwendet werden. Die bekannten Vorrichtungen sind beispielsweise in einem Gehäuse aufgenommen, dass in den Saalboden eingelassen ist, um es zu ermöglichen, dass der Stuhl in seiner Position entlang der Führung zu einem fest montierten Tisch verändert werden kann. Mit den bekannten Stuhlführungsvorrichtungen soll sichergestellt werden, dass bei Nichtbesetzung des Stuhles der Stuhl beispielsweise über eine schräge Ebene oder einen Rückstellmechanismus, der zwischen dem Stuhl und dem Gehäuse wirkt, wobei zumindest ein Teil des Rückstellmechanismus am oder im Gehäuse angeordnet ist und dieser mit dem Stuhl verbunden ist, automatisch in eine Ruhe- oder Ausgangsposition verfährt, in der die Sitzfläche des Stuhles weitestgehend unterhalb des fest montierten Tisches gelegen Ist Somit Kann sichergestellt werden, dass geordnete Stuhlpositionen automatisch eingenommen werden, um hinter den Rückenlehnenflachen der Stühle ausreichende Durchgänge bereitzustellen.

Eine Stuhlführungsvorrichtung der genannten Art ist beispielsweise aus der DE 20 2016 106 901 U1 des Anmelders bekannt, bei welcher zumindest ein Magnet mit einer Kolbenstange einer Gasdruckfeder, einem Schlitten oder einem Gehäuse verbunden Ist, wobei der Magnet zur Ausbildung einer lösbaren Verbindung zwischen der Kolbenstange und dem Schlitten oder dem Gehäuse dient.

Eine Stuhlführungsvorrichtung mit Gehäuse ist aus der DE 20 2005 005 317 U1 des Anmelders bekannt Der Stuhl ist dabei auf einem Standrohr als Stuhlbasis angeordnet, die Ober den Schlitten der Linearführung längsverschieblich gelagert ist Es ist damit möglich, den Stuhl vom Tisch weg zu rücken und, sobald die auf dem Stuhl sitzende Person aufsteht, in die Ausgangsstellung automatisch zurückzuführen. Daher kommen auch solche Stuhlführungsvorrichtungen vornehmlich in Konferenzräumen bzw. Sitzungssälen zum Einsatz. Die Stuhlführungsvorrichtung umfasst eine Gasdruckfeder mit Kolbenstange, ein Dämpferelement zwei zueinander entgegengesetzt wirkende Flaschenzüge und in Rotientragereinheiten angeordnete Umlenkrollen, wobei sämtliche Bauteile in einem Gehäuse eingefasst sind und diese Bauteile insgesamt für die Rückstellung des Stuhles aus der Endposition in die Ausgangsposition ausgebildet sind.

Aus der DE 20 2013 005 988 U1 ist eine Vorrichtung zur Abstützung und zur beweglichen Führung eines Stuhles entlang einer Führungsschiene bekannt bei welcher ein über Magnete an einem Grundgehäuseteil gehaltenes Abdeckblech vorgesehen ist, um dieses Abdeckblech werkzeuglos entfernen zu können, um dadurch einen Zugang zu unter dem Abdeckblech liegenden Höheneinstellern zu schaffen, über die das Gehäuse insgesamt mit der Führungsschiene in eine Schrägstellung überführbar ist

Aus der DE 10 2010 032 265 A1 des Anmelders ist eine Stuhlführungseinrichtung bekannt, die mit einer Arretierung in Form eines Magneten versehen ist, mit der ein Schlitten in einer beliebig wählbaren Position innerhalb des Verfahrweges festgehalten werden kann. Die Rückstellung des Stuhles aus der Endposition zurück in die Anfangsposition erfolgt über die Ausgestaltung einer schiefen Ebene, deren Neigungswinkel vorteilhaft so flach einstellbar ist, dass die Gesamtaufbauhöhe der Stuhlführungsvorrichtung klein gehalten wird.

Schließlich wird auch in der DE 203 20 975 U1 für eine Stuhlführung vorgeschlagen, dass der Deckel für die Stuhlführung an seiner Oberseite vollkommen glatt und eben ausgebildet ist und an seiner Unterseite Magnete trägt, die mit entsprechenden Gegenpolen in dem eigentlichen Gehäuse der Stuhlführung derart zusammenwirken, dass hierdurch der Deckel fest auf dem Gehäuse gelagert ist Eine zusätzlich angeordnete Feder sorgt dafür, dass der Laufwagen der Stuhlführung in einer Richtung stets gegen diese Feder verfahrbar ist, und in der entgegengesetzten Richtung durch diese Feder zurückgeholt wird.

Bei den bekannten Stuhlführungavorrichtungen zum Verfahren eines Stuhles ist nachteilig, dass diese eine Rückführung des Stuhles aus der Endposition in die Ausgangsposition mittels verschleißbaren oder aufwändigen Mechaniken realisieren, die eine Nachbereitung in Form einer Einstellung oder eines Austausches von verschlissenen Bauteilen im Rahmen von Wartungsarbeiten benötigen. Entsprechend ist entweder der Montageaufwand oder der Sanierungsaufwand in Form von Inspektionsintervallen sehr hoch. Zudem ist die einmal festgelegte Position der bekannten Stuhlführungsvorrichtung in einem Sitzungssaal nur durch aufwendiges Zurückbauen und Neuinstallation der Gehäuse möglich. Eine Veränderung der Sitzplatzgeometrie ist daher realistisch nicht ausführbar.

### Offenbarung der Erfindung

Aufgabe der Erfindung ist, die aus dem Stand der Technik bekannten und an Stuhlführungsvorrichtungen gekoppelten Verfahrtechniken von Stühlen zumindest teilweise zu verbessern. Insbesondere ist es die Aufgabe der vorliegenden Erfindung eine Stuhlführungsvorrichtung mit einem neuen revolutionären Rückstellmechanismus zur Rückstellung des Stuhles aus der zu der Ausgangsposition unterschiedlichen Position E in die Ausgangsposition A auszubilden, welcher autark ohne kraftschlusstechnische Kopplung beispielsweise mit einem Gehäuse oder mit der Bodeninstallation, beispielsweise einer Linearführung arbeitet.

Die voranstehende Aufgabe wird durch eine mechanische Antriebsvorrichtung mit den Merkmalen des Anspruchs 1, durch einen Stuhl mit den Merkmalen des Anspruchs 9, durch einen Stuhl mit den Merkmalen des Anspruchs 10 und durch die Verwendung der erflndungsgemäßen Antriebsvorrichtung für einen selbsttätig verfahrbaren Stuhl mit den Merkmalen des Anspruchs 11 gelöst. Dabei gelten Merkmale und Details, die im Zusammenhang mit der erfindungsgemäßen mechanischen Antriebsvorrichtung beschrieben sind, selbstverständlich auch im Zusammenhang mit den erfindungsgemäßen Stühlen und der erfindungsgemäßen Verwendung und jeweils umgekehrt, so dass bezüglich der Offenbarung zu den einzelnen Erfindungsaspekten stets wechselseitig Bezug genommen wird, bzw. werden kann.

Die erfindungsgemäße mechanische Antriebsvorrichtung für einen verfahrbaren Stuhl, der aus einer Ausgangsposition A in Richtung einer zu der Ausgangsposition unterschiedlichen Position E verfahren werden kann, wobei beim Verfahren des Stuhles die Antriebsvorrichtung derart kraftbeaufschlagt wird, dass durch die Positionsänderung des Stuhles eine auf die Antriebsvorrichtung wirkende Rückstellkraft aufgebaut wird, wobei die Rückstellkraft entgegen der Verfahrrichtung von der Ausgangsposition A in die unterschiedliche Position E wirkt, so dass mittels der auf die Antriebsvorrichtung wirkenden Rückstellkraft der Stuhl aus der unterschiedlichen Position E selbsttätig in die Ausgangsposition A zurück fährt, schließt die technische Lehre ein, dass die Antriebsvorrichtung im Stuhl verbaut ist..

Im Gegensatz zu den bekannten Stuhlführungsvorrichtungen, die eine Einstellung des Neigungswinkels einer Linearführung benötigen, was eine nicht unterschreitbare Gesamtaufbauhöhe bedingt, oder welche verschleißbare Bauteile, wie Rückstellfedern, Kolben oder aufwändig gelenkte Seilzüge aufweisen, die eine technische Kopplung zwischen dem bewegbaren Stuhl relativ zu einem Gehäuse oder dem Boden benötigen, um die Rückstellkraft zum Verfahren des Stuhles aufbauen zu können, wirkt die in dem Stuhl selber verbaute erfindungsgemäße Antriebsvorrichtung durch die beim Verfahren des Stuhles aufgebaute Rückstellkraft als Rückstellmechanismus. Dadurch kann ein mit der erfindungsgemäßen mechanischen Antriebsvorrichtung ausgestatteter Stuhl, welche zum Aufbau der Rückstellkraft keine funktionelle Verbindung, d.h. keine technische Kopplung mit einem Gehäuse oder einer anderweitigen Bodeninstallation benötigt, frei wählbar an jeder Position im Raum aufgestellt werden. Es ist natürlich auch denkbar, die erfindungsgemäße mechanische Antriebsvorrichtung, die in dem Stuhl verbaut ist, mit den aus dem Stand der Technik bekannten Stuhlführungsvorrichtungen zu kombinieren oder die bei den bekannten Stuhlführungsvorrichtungen ausgebildeten Rückstellmechanismen durch die erfindungsgemäße Antriebsvorrichtung zu ersetzen.

Als "Rückstellkraft" soll im Sinne der vorliegenden Erfindung eine Kraft verstanden werden, die auf einen, aus seiner Ruhelage (Anfangsposition A) heraus bewegten Stuhl wirkt. Die Rückstellkraft wirkt hierbei in Richtung der Ruhelage des Stuhles, wobei diese den Stuhl aus seiner zu der Anfangsposition A unterschiedlichen Position E in seine Ruhelage "zurückstellen" will. Vorteilhaft ist dabei die Größe der Rückstellkraft. d.h. die in der Feder aufgebaute Spannenergie, vorteilhaft gleich der Größe der kinetischen Energie, die für die Zurückführung des Stuhles in die Ausgangsposition benötigt wird.

Als "Schlitten" im Sinne der vorliegenden Erfindung wird der Aufbau mit einer Stuhibeinaufnahmehülse, im Folgenden als Stuhlaufnahme bezeichnet, und Laufwagen mit oder ohne Gleitlager verstanden.

Als "Linearführung" wird eine lineare Führung des Schlittens zwischen den Positionen A und E verstanden. Eine Linearführung ist zumindest eine Führung entlang einer Führungsschiene in Form einer Monoschiene. Auch zumindest zwei parallel zueinander liegende, in einem Gehäuse aufgenommene, aus dem Gehäuse geformte Führungsschienen oder zumindest eine ohne ein Gehäuse installierte Führungsschiene, sind im Sinne der vorliegenden Erfindung als Linearführung in Form einer linearen Führung zu verstehen. Eine Linearführung im Sinne der vorliegenden Erfindung kann auch als Führung innerhalb einer Begrenzung, wobei diese von links und rechts des Schlittens beispielsweise durch in Reihe angeordnete Magneten gebildet ist, welche vorteilhaft bei der Bodeninstallation der Stuhlführungsvorrichtung im Boden eingelassen werden, verstanden werden, wobei die Magnete entweder eine Positionierung des Stuhls an bestimmten Positionen entlang der Linearführung erlauben, oder die Magnete als Magnetbeschleuniger für den Stuhl dienen, welche in Kombination mit der auf die erfindungsgemäße Antriebseinheit wirkende Rückstellkraft den Stuhl verfahren. Eine "Linearführung" im Sinne der vorliegenden Erfindung kann auch als eine in einen Teppich eingewebte oder auf diesen oder auf einen anderen Bodenbelag applizierte Struktur verstanden werden.

In vorteilhafter Weise umfasst die mechanische Antriebsvorrichtung zumindest eine Konstantkraftfeder, vorzugsweise eine Spiral- oder Rollfeder, welche beim Verfahren des Stuhles aus der Ausgangsposition A in Richtung der zu der Ausgangsposition unterschiedlichen Position E aufgezogen wird. D.h. ganz allgemein die Konstantkraftfeder aus ihrer ursprünglichen Form in eine zu dieser ursprünglichen Form unterschiedliche Form gebracht wird. Da die Feder so ausgebildet ist, dass diese wieder ihre ursprüngliche Form annehmen möchte, resultiert in der Formveränderung der Konstantkraftfeder die auf die Antriebsvorrichtung wirkende Rückstellkraft. Die als Roll- oder Spiralfeder ausgebildete Konstantkraftfeder wirkt somit als Drehmomenterzeuger für die erfindungsgemäße mechanische Antriebsvorrichtung.

Vorzugsweise kann die Konstantkraftfeder als Doppel- oder Mehrfachbandfeder ausgestaltet sein, wodurch sich die Rückstellkraft und das Drehmoment vorteilhaft auf das Stuhlgewicht und den zu verfahrenen Weg anpassen lassen.

In vorteilhafter Weise kann die Rollfeder als Erzeuger eines konstanten Drehmoments eingesetzt werden, wobei diese in einer bekannten zweiachsigen Anordnung angeordnet sein kann, wodurch eine spezielle Drehmomentcharakteristik mit einem gleichmäßigen Lauf der Antriebsvorrichtung über viele Aufwickelumdrehungen bewirkt werden kann.

Als Spiralfeder oder Spiralfeder-Antrieb wird vorteilhaft zumindest ein in einer Ebene in Schneckenlinie aufgewickeltes und dadurch stark gekrümmtes Metallband verstanden, welche vorteilhaft mit mechanischen Hilfseinrichtungen (Hemmung, reibende Drehzahl-Regler) einen gleichmäßigen Ablauf erreicht.

In besonders vorteilhafter Weise ist der Spiralfeder-Antrieb ein Rollfeder-Antrieb, bei dem eine Spiralfeder zwischen zwei Gehäusen (Trommeln) hin- und her-bewegt wird. In bevorzugter Ausführung hat die Feder in beiden Trommeln jeweils eine unterschiedliche Krümmung, und speichert somit mehr Energie als bei einseitiger Krümmung. Beim Aufziehen des Antriebs wird die Feder in der Abtriebsstrommel aufgewickelt, wodurch die Rückstellkraft aufgebaut wird. Beim Ablauf, d.h. bei Kraftbeaufschlagung auf die erfindungsgemäße Antriebsvorrichtung, zieht sich die Feder in die als Vorratstrommel bezeichnete Trommel zurück, um ihre ursprüngliche Form anzunehmen, und treibt dabei die Abtriebstrommel an, die mit einem Rad, einem Schlitten oder einer Rolle gekoppelt ist, oder die als Rad oder Rolle ausgebildet ist.

In besonders vorteilhafter Weise ist die erfindungsgemäße Antriebsvorrichtung als Federmotor ausgestaltet oder mit einem Federmotor gekoppelt, wobei der Federmotor zumindest eine Federeinheit mit einer Konstantkraftfeder, einer Federachse und einer Federaufnahme umfasst. Vorzugsweise sind die Komponenten des Federmotors in einem Gehäuse aufgenommen, wobei beispielsweise eine Stuhlaufnahme des Stuhles oder eine Rolle das Gehäuse für den Federmotor bilden können.

Ganz allgemein werden im Sinne der vorliegenden Erfindung als Konstantkraft-, Roll- oder Spiralfeder Federn mit unterschiedlichen Charakteristiken verstanden, beispielsweise eine Feder, die unabhängig ihrer Auslängung eine konstante Rückzugs- bzw. Rückstellkraft entwickelt oder eine Feder, deren Rückzugs- bzw. Rückstellkraft abhängig von der Auslängung der Feder ist. Natürlich ist auch eine Kombination beider Federtypen in einem Federmotor oder in zwei auf einer gemeinsamen Achse hintereinander geschalteten Federeinheiten oder auf zwei parallel zueinander liegenden Achsen, die über ein Antriebsverbindungselement, beispielsweise eine Kette in Form einer Gleiskette, ein Gummigürtel oder eine Gummikette, antriebstechnisch miteinander verbunden sind.

Um ein versehentliches Zerstören der Feder bzw. des Federmotors zu verhindern, sind diese vorteilhaft mit einem Freilauf in Form einer nur in einer Drehrichtung wirkenden Kupplung kraftschlusstechnisch gekoppelt, welche dazu dient, bei Drehrichtungsumkehr oder wenn die Drehzahl des eigentlich anzutreibenden Teils großer als die des treibenden Teils ist, die Verbindung zwischen Antriebsvorrichtung und Konstantkraftfeder selbsttätig zu lösen. Der Freilauf kann vorteilhaft als Klemmrollen-, Klemmkörper-, Sperrklinken, Klauenringe- oder Schlingfederfreilauf ausgebildet sein.

Vorteilhaft ist der Freilauf als selbstsynchronisierende Schaltkupplung ausgebildet, bei dem die Drehmomentübertragung vorteilhaft über eine Zahnkupplung erfolgt, die im Überholbetrieb ausgekuppelt ist Das Einkuppeln erfolgt vorzugsweise mit Hilfe eines parallel eingebauten Sperrklinkenfreilaufes, wobei dieser Vorgang selbstsynchronisierend ist. Das bietet den Vorteil, dass während des Einkuppelns noch kein Drehmoment übertragen wird, danach ist ausschließlich die Zahnkupplung drehmomentbelastet. Diese Bauart eignet sich vorteilhaft zur Übertragung von hohen Leistungen, d.h. bei hohen Stuhlgewichten, da die Sperrklinken des Hilfsfreilaufs nur durch den Schaltvorgang belastet sind.

Die Funktion eines vorteilhaften Rollenfreilaufs kann dadurch beschrieben werden, dass Rollen von Federn in einer Drehrichtung in einen sich verengenden Spalt zwischen Innen- und Außenring gedrückt werden. Treibt der Innen- den Außenring in Richtung der Federkraft an, so werden die Rollen eingeklemmt und es entsteht eine kraftschlüssige Verbindung. Beim Antrieb durch den Außenring wird diese aufgehoben. Bei dieser Ausführungsform kann beispielsweise der Außenring die Mantelfläche einer Rolle oder eines Rades des Stuhl sein, wobei beim Antrieb der Mantelflache, nämlich durch Kraftbeaufschlagung der durch die Konstantkraftfeder aufgebauten Rückstellkraft, der Stuhl aus der zu der Anfangsposition unterschiedlichen Position E in die Ausgangsposition A zurück verfährt.

Ein erster erfindungsgemäßer Stuhl mit einer mechanischen Antriebsvorrichtung, insbesondere der erfindungsgemäßen mechanischen Antriebsvorrichtung, umfassend zumindest eine Rolle oder zumindest ein Rad, sieht erfindungswesentlich vor, dass die Antriebsvorrichtung in der Rolle oder dem Rad verbaut ist, oder mit der Rolle oder dem Rad kraftschlusstechnisch verbunden werden kann. Als Stuhl im Sinne der vorliegenden Erfindung wird insbesondere ein Büro- oder Arbeitsstuhl verstanden, welche aus arbeitsschutztechnischen Gründen eine Mehrzahl von Rollen oder Rädern aufweisen, wobei entweder sämtliche Räder oder Rollen mit einer erfindungsgemäßen Antriebsvorrichtung ausgebildet sind oder mit einer solchen kraftschlusstechnisch koppelbar und entkoppelbar sind, oder zumindest nur ein Rad oder eine Rolle mit der erfindungsgemäßen Antriebsvorrichtung ausgebildet oder zumindest form- und/oder kraftschlusstechnisch verbunden und entkoppelt werden kann, wodurch die Rolle oder das Rad als Antriebsrolle oder als Antriebsrad ausgebildet sind.

Ein zweiter erfindungsgemäßer Stuhl mit einer mechanischen Antriebsvorrichtung, Insbesondere der erfindungsgemäßen mechanischen Antriebsvorrichtung, umfassend zumindest eine Stuhlaufnahme für eine Stuhlführungsvorrichtung, wobei die Stuhlaufnahme entlang einer Linearführung geführt wird, sieht erfindungswesentlich vor, dass die Antriebsvorrichtung in der Stuhlaufnahme verbaut ist, oder mit der Stuhlaufnahme zumindest form- und/oder kraftschlusstechnisch verbunden und entkoppelt werden kann.

In bevorzugter Weise bildet die Stuhlaufnahme ein Gehäuse für die Antriebsvorrichtung, insbesondere für die als Federmotor ausgestaltete Antriebsvorrichtung.

Schließlich sieht die erfindungsgemäße Verwendung einer mechanischen Antriebsvorrichtung, insbesondere der erfindungsgemäßen mechanischen Antriebsvorrichtung, in einem selbsttätig verfahrbaren Stuhl, insbesondere in einem entlang einer Linearführung geführten Stuhl oder einem über zumindest eine Rolle oder zumindest ein Rad verfahrbaren Stuhl, vor, dass der aus der zur Anfangsposition A unterschiedlichen Position E verfahrene Stuhl zurück in die Ausgangsposition A durch die auf die Antriebsvorrichtung wirkende Rückstellkraft fährt, die durch Verfahren des Stuhles aus der Ausgangsposition A in Richtung der zu der Ausgangsposition unterschiedlichen Position E über die Antriebsvorrichtung aufgebaut wurde.

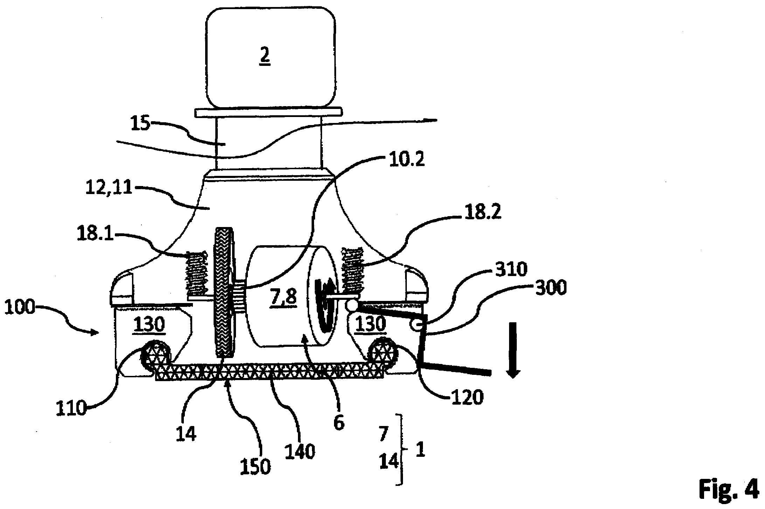

Die Antriebsvorrichtung kann auch einen Raupen- oder Kettenantrieb mit zumindest einer, bevorzugt mit zwei oder mehr Ketten in Form von Gleis- oder Gummiketten oder Reifengürtein in Form von Laufbändem umfassen, wobei die Antriebsvorrichtung zumindest zwei parallel zueinander liegende Achsen umfasst, wobei zumindest eine Achse, bevorzugt beide oder alle Achsen antriebstechnisch, d.h. diese zumindest form- und/oder kraftschlüssig mit einem Antrieb in Form eines Federantriebs oder in Kombination mit einem motorischen oder Fluid angetrieben Antrieb verbunden sind. Natürlich ist es auch denkbar, dass nur eine von zwei oder mehr Achsen angetrieben wird und die zweite oder die anderen dazu parallel liegenden Freilauf-Achsen sind, die zur Spannung und/oder zur Führung des Antriebsverbindungselements dienen. Um die mit einem Raupenantrieb ausgestaltete Antriebsvorrichtung in eine Freilaufposition durch Aktiv-Stellung des Kipp- oder Freistellhebels zu überführen, müssen beide oder die mehren Achsen soweit angehoben werden, dass das Antriebsverbindungselement oder die Antriebsverbindungselemente kontaktfrei zum Boden oder zu einer Abstützvorrichtung sind, wie dies beispielhaft in Figur 4 für das Reib- oder Antriebsrad dargestellt ist Ein weiterer Erfindungsaspekt der vorliegenden Erfindung ist die Unterstützung der erfindungsgemäßen mechanischen Antriebsvorrichtung durch beispielsweise einen elektromotorischen oder Fluid getriebenen, beispielsweise hydraulischen Antrieb. Natürlich kann die erfindungsgemäße Antriebsvorrichtung auch vollständig durch den elektromotorischen oder Fluid getriebenen Antrieb ersetzt werden. In Verbindung mit einer Steuerung ist es bei Unterstützung der erfindungsgemäßen mechanischen Antriebsvorrichtung oder durch Ersetzen der erfindungsgemäßen mechanischen Antriebsvorrichtung durch einen elektromotorischen oder Fluid getriebenen Antrieb denkbar, dass ein damit verbauter Stuhl steuerbar in der Ausgangsposition oder in die zur Ausgangsposition unterschiedliche Position verfahrbar ist.

Um hier Wiederholungen bezüglich der Vorteile des erfindungsgemäßen Stuhls, der erfindungsgemäßen Stühle und der erfindungsgemäßen Verwendung der mechanischen Antriebsvorrichtung zu vermeiden, wird auf die Beschreibung der vorteilhaften Ausgestaltungen der erfindungsgemäßen mechanischen Antriebsvorrichtung verwiesen und wird vollumfänglich auf diese zurückgegriffen.

### Bevorzugte Ausführungsbeispiele:

Weitere, die Erfindung verbessernde Maßnahmen, werden nachstehend mit der Beschreibung von bevorzugten Ausführungsbeispielen der Erfindung anhand der Figuren näher dargestellt. Dabei können die in den Ansprüchen und in der Beschreibung erwähnten Merkmale jeweils einzeln für sich oder in beliebiger Kombination erfindungswesentlich sein. Dabei ist zu beachten, dass die in den Figuren dargestellten Ausführungsbeispiele nur beschreibenden Charakter haben und diese nicht dazu gedacht ist, die Erfindung in irgendeiner Form einzuschränken.

Es zeigen:
- Fig. 1: eine perspektivische Explosionsdarstellung einer Federeinheit eines Federmotors, der erfindungsgemäß in einem Stuhl verbaut werden kann,
- Fig. 2: eine Querschnittszeichnung eines Freilaufes mit zylindrischen Klemmrollen (Rollen-Freilauf),
- Fig. 3: eine schematische Skizze einer Ausführungsform einer erfindungsgemäßen Antriebsvorrichtung mit einem in einem Gehäuse aufgenommenen Federmotor, verbaut in einer Stuhlaufnahme in frontaler Schnittansicht,
- Fig. 4: eine schematische Skizze der Antriebsvorrichtung aus Figur 3 in Aktivstellung eines Kipp- oder Freistellhebels
und
- Fig. 5: die Antriebsvorrichtung aus den vorhergehenden Figuren mit einer gehäusefreien und axial gelagerten Konstantkraftfeder.

In den unterschiedlichen Figuren sind gleiche Teile stets mit denselben Bezugszeichen versehen, weshalb diese in der Regel nur einmal beschrieben werden.

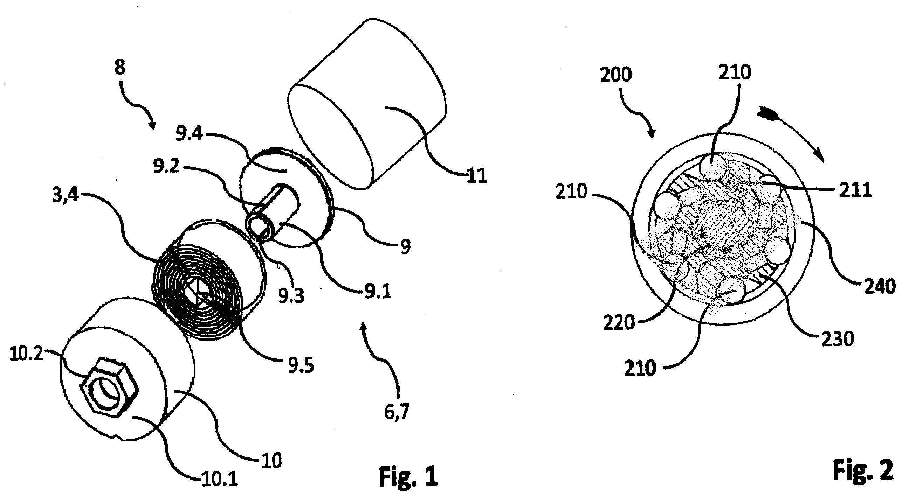

Fig. 1 zeigt die Bestandteile einer Federeinheit 8 mit einer mit einem Federmotor 7 ausgestalteten erfindungsgemäßen Antriebsvorrichtung 1. Die Federeinheit 8 umfasst eine Konstantkraftfeder 3,4 eine Federachse 9 und eine Federaufnahme 10. Die Federachse 9 weist einen zylinderförmigen Achsabschnitt 9.1 auf, der in Längsrichtung einen durchgehenden Schlitz 9.2 und diesem gegenüberliegend einen weiteren Schlitz 9.3 aufweist. Der Achsabschnitt ist mittig auf einer kreis- und scheibenförmigen Federauflage 9.4 angeordnet. Die durchgehenden Schlitze 9.2 und 9.3 dienen zur Aufnahme eines Federendes 9.5 der Konstantkraftfeder 3,4. Die Federaufnahme 10 umfasst eine zylinderförmige Mantelfläche, deren Innenmaße zur Aufnahme der Konstantkraftfeder 3,4 geeignet ist. Eine an der Federaufnahme 10 ausgebildete Abdeckscheibe 10.1 weist mittig ein Kupplungselement 10.2 auf, welches hier als ein vorstehender Sechskant ausgebildet ist. Ein im Wesentlichen zylinderförmiges Gehäuse 11 nimmt die Federaufnahme 10 mit samt der Konstantkraftfeder 3,4 und der Federachse 9 auf.

Figur 2 zeigt beispielhaft eine Querschnittszeichnung eines Freilaufes 200 mit zylindrischen Klemmrollen 210 (Rollen-Freilauf), welcher beispielsweise über das Kupplungselement 10.2 der in Figur 1 dargestellten Federeinheit 8 eines Federmotors 7 mit diesem kraftschlüssig verbunden werden kann. Die Klemmrollen 210 des Freilaufes 200 wirken in Form einer nur in einer Drehrichtung wirkenden Kupplung zwischen dem Federmotor 210 und einem Antriebsrad oder einer Antriebsrolle 14, welche Teile der erfindungsgemäßen Antriebsvorrichtung 1 sind. Die Kupplung dient dazu bei Drehrichtungsumkehr oder wenn die Drehzahl des eigentlich anzutreibenden Teils größer als die des treibenden Teils ist, die Verbindung zwischen dem Antriebsrad oder der Antriebsrolle 14 und der Konstantkraftfeder 3,4 selbsttätig zu lösen. Der innere Pfeil 220 zeigt die Drehrichtung des Antriebs an. Die Federn 211 drücken die Klemmrollen 210 leicht zwischen das mit den Klemmrollen 210 zusammen rotierende Innenteil 230 (im Fachjargon "Stern" genannt) und den Außenring 240. Bei Drehmomentübertragung entstehen radiale Kräfte, so dass sich die Klemmrollen 210 in ihren Aufnahmeräumen verkeilen. Kehrt man die Drehrichtung um oder ist die äußere Drehzahl größer als die innere Drehzahl, rollen die Klemmrollen 210 in Richtung der Feder 211, die Klemmung wird somit aufgehoben. Somit kann beispielsweise wirkungsvoll eine Zerstörung eines Federmotors 7 oder einer Konstantkraftfeder 3,4 der erfindungsgemäßen Antriebsvorrichtung 1 verhindert werden.

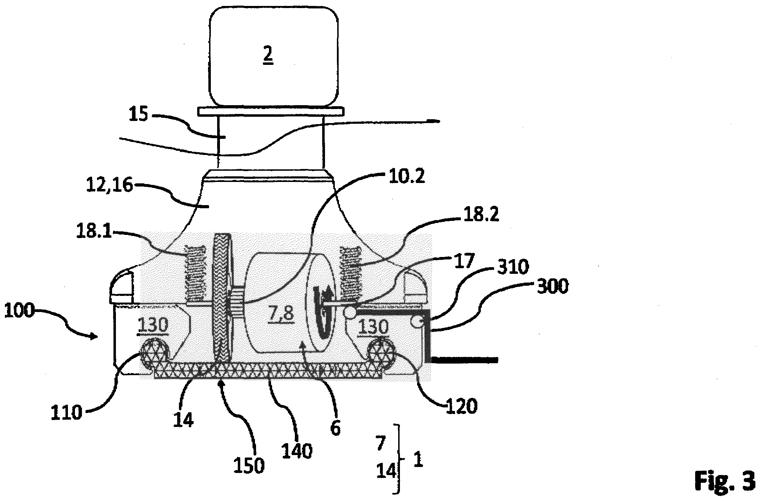

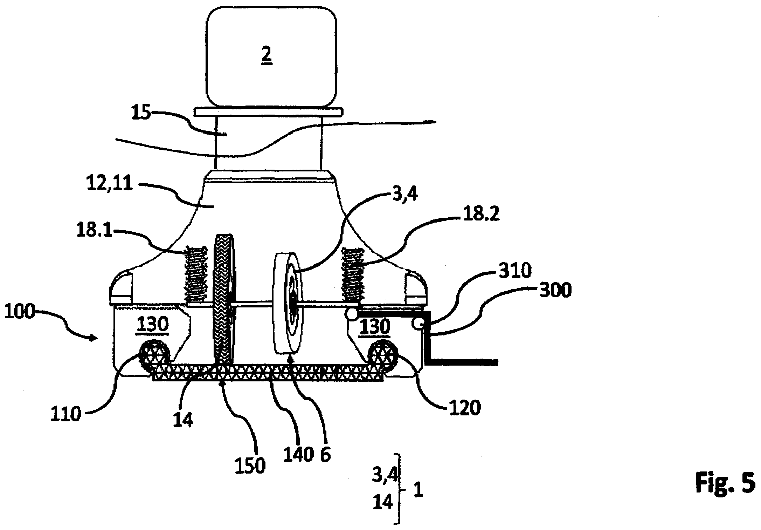

Figur 3 zeigt In einer schematischen Skizze eine in einer Stuhlaufnahme 12 eines Stuhles 2 angeordnete mechanische Antriebsvorrichtung 1 in frontaler Schnittansicht, wobei bei dieser Ausführungsform der Stuhl 2 entlang von Linearführungen 110, 120 einer Stuhlführungsvorrichtung 100 geführt wird. Das Sitzteil des Stuhles ist der Übersicht halber in dieser und den folgenden Figuren stark verkleinert dargestellt Eine Stuhlbasis 12, die erfindungsgemäß Teil des Stuhles 2 ist, die aber auch ein Teil der Stuhlführungsvorrichtung 100 sein kann, ist in Form einer Stuhlaufnahmehülse für ein Stuhlbein 15 des über die Stuhlführungsvorrichtung 100 geführten Stuhles 2 ausgebildet Insofern ist ein weiterer Erfindungsaspekt eine Stuhlführungsvorrichtung mit sämtlichen Merkmalen der erfindungsgemäßen Antriebsvorrichtung. Die Stuhlaufnahme 12 dient bei dieser Ausführungsform zudem als Gehäuse 16 für die mit einem Federmotor 7 ausgebildete Antriebsvorrichtung 1. Die Antriebsvorrichtung 1 umfasst eine auf einer Achse 17 axial gelagerte Federeinheit 8 in Form eines Gehäuse 11 gekapselten Federmotors 7, wie dieser in Figur 1 dargestellt ist, und ein auf der Achse 17 gelagertes und mit dem Federmotor 7 über das Kupplungselement 10.2 verbundenes Reib- oder Antriebsrad 14, welches auch als Rolle ausgebildet sein kann. Ober Laufwagen 130 wird die Stuhlbasis 12 entlang von zwei Linearführungen 110 und 120 geführt Von der Ausgangsposition A kann die Stuhlbasis 12 aus der Ausgangsposition A in zumindest eine von der Ausgangsposition A unterschiedliche Position E entlang der Linearführungen 110 und 120 verfahren werden. Zwischen den beiden Linearführungen 110 und 120 liegt eine als Mittelsteg ausgebildete Abstützvorrichtung 140, welche mit den Linearführungen 110 und 120 verbunden ist. Vorliegend sind die Linearführungen 110 und 120 einteilig mit der Abstützvorrichtung 140 ausgebildet und bilden zusammen mit der Abstützvorrichtung 140 ein gemeinsames Strangprofil. Die Abstützvorrichtung 140 dient zur Fixierung der Linearführungen 110 und 120 auf dem Boden. Zur Befestigung der Abstützvorrichtung 140 auf dem Boden, das heißt zur Fixierung der Linearführungen 110 und 120 auf dem Boden dienen Befestigungselemente beispielsweise in Form von Schrauben oder Nieten, die durch in der Abstützvorrichtung 140 ausgestaltete Durchgangsbohrungen greifen und die beispielsweise in in den Boden eingesetzte Dübel zur Verankerung der Stuhlführungsvorrichtung 100 am Boden gedreht werden. Vorliegend sind die Linearführungen 110 und 120 jeweils in Form einer O-Profil- Schiene ausgestaltet. Die Schiene kann aber auch jeden erdenklichen Profilquerschnitt aufweisen. Die Linearführungen 110 und 120 werden von den Laufwagen 130, die unterhalb der Stuhlbasis 12 mit dieser verbunden angeordnet sind, derart umgriffen, dass sich diese zumindest abschnittsweise an der Linearführung 110 und 120 abstützen. Wie in der der frontalen Schnittansicht zu erkennen ist, stützt die Abstützvorrichtung 140 die Linearführungen 110 und 120 beabstandet zum Boden am Boden ab. Zum Abstützen dient eine Basisfläche 150 der Abstützvorrichtung 140, die vorliegend vollflächig auf dem Boden aufliegt Darüber hinaus kann sich die Abstützvorrichtung 140 auch mittels an der Abstützvorrichtung 140 ausgebildeten oder daran angeordneten Füßen (hier nicht dargestellt) am Boden abstützen. Der Mittelsteg der Abstützvorrichtung 140 in Figur 3 ist zwischen den Linearführungen 110 und 120 mit gleichbleibendem Profil planeben ausgestaltet, das heißt mit einer durchgehend gleichbleibenden Höhe oder Stärke ausgebildet. Die der Basisfläche 160 gegenüberliegenden Fläche der Abstützvorrichtung dient dem Reib- oder Antriebsrad 14 als Kontakt- bzw. Lauffläche. Beim Verfahren der Stuhlbasis 12 entlang der Linearführungen 110 und 120 aus der Ausgangsposition A in Richtung einer zu der Ausgangsposition unterschiedlichen Position E wird der über das Kupplungselement 10.2 mit dem Reib- oder Antriebsrad 14 verbundene Federmotor 7, vorliegend durch den Pfeil markiert, entgegen des Uhrzeigersinns aufgezogen, wobei die für die Rückführung des Stuhles 2 aus der zur Anfangsposition unterschiedlichen Position in die Anfangsposition zurück benötigte Energie in Form der Rückstellkraft aufgebaut wird. Ober die aufgebaute Rückstellkraft dreht der Federmotor 7 die Achse 17 und das auf der Achse 17 angeordnete und über das Kupplungselement 10.2 mit dem Federmotor 7 drehtechnisch verbundene Reib- oder Antriebsrad 14 im Uhrzeigersinn, wodurch der Stuhl 2, insbesondere wenn dieser unbesetzt ist, in die Ausgangsposition selbsttätig zurück verfährt Um die Rückstellkraft abzubauen oder um den Stuhl 2 ohne Aufbau der Rückstellkraft verfahren zu können, kann das Reib- oder Antriebsrad 14 kontaktfrei zu der Abstützvorrichtung 140 oder dem Boden gestellt werden. In der vorliegenden Ausführungsform ist dazu die Achse 17 an Federelementen 18.1 und 18.2 aufgehängt. Auf der rechten Seite in der Figur ist unterhalb des rechten Federelementes 18.2 ein Kipp- oder Freistellhebel 300 angeordnet, der sich In der Figur 3 und in der Figur 5 in einer Neutralstellung befindet. Der Kipp- oder Freistellhebel 300 dient dazu, um die Antriebsvorrichtung 1 in eine Freilaufstellung überführen zu können. In der Figur ist der Kipp- oder Freistellhebel 300 nach außen aus der Stuhlbasis 12 heraus geführt, so dass dieser von einer Person problemlos bedient werden kann. In der in den Figuren 3 und 5 dargestellten Neutralstellung hat das Reib- oder Antriebsrad 14 Kontakt zu der Abstützvorrichtung 140 und dient in dieser Stellung zum Auf- ober Abbau der Rückstellkraft. Um die Rückstellkraft zu potenzieren können neben der bereits beschriebenen vorteilhaften Ausgestaltung einer in zwei Gehäusen mit unterschiedlicher Krümmung aufgenommenen Konstantkraftfeder 3,4 vorteilhaft auch mehrere als einzelne Federeinheiten 8 oder Module ausgestaltete Federmotoren 7 auf der Achse 17 modular hintereinander geschaltet werden.

Figur 4 zeigt die Stuhlaufnahme 12 aus Figur 3, jedoch mit dem Unterschied, dass der Kipphebel 300 aus der Neutralstellung in eine Aktivstellung überführt ist, indem der Kipphebel 300 über ein Gelenk 310 nach unten gedrückt (s. Pfeil) in eine Schrägstellung überführt wurde. Diese Stellung des Kipphebels 300 ist vorteilhaft arretierbar. In der Aktivstellung drückt der linke Teil, der in Kontakt mit der Achse 17 ist, unter Stauchung der Federelemente 18.1 und 18.2 derart leicht nach oben, dass die die Federelemente 18.1 und 18.2, die mit der Achse 17 verbunden sind, diese derart anhebt, dass das Reib- oder Antriebsrad 14 kontaktfrei zu der Abstützvorrichtung 140 gestellt ist. In der Aktivstellung des Kipphebels 300 kann beispielsweise durch Abbau der Rückstellkraft die in dem Federmotor 7 aufgezogene Konstant-, insbesondere Spiral oder Rollfeder 3,4, in ihre ursprüngliche Form zurückkehren und dabei entlastet werden, ohne dass dabei der Stuhl 2 über das Reib- oder Antriebsrad 14 verfahren wird. Durch Entlastung der Konstantkraftfeder 3,4 kann beispielsweise ein Überziehen der Konstantkraftfeder 3,4 aufgehoben werden, wobei der Federmotor 7, die Achse 17 und das Reib- oder Antriebsrad 14 im Uhrzeigersinn frei drehen, ohne dabei ein Drehmoment auf die Abstützvorrichtung 140 oder den Boden über das Reib- oder Antriebsrad 14 zu übertragen. Die Aktivstellung des Kipphebels 300 kann auch dazu dienen, um das Reib- oder Antriebsrad 14 kontaktfrei zum Boden oder der Abstützvorrichtung 140 zu stellen, damit beim Verfahren des Stuhles 2 über den Federmotor 7 oder eine gehäusefreie Konstantkraftfeder 3.4. wie in Figur 5 dargestellt, durch Freilaufstellung des Reib- oder Antriebsrads 14 keine Rückstellkraft aufgebaut wird. Ein solcher Stuhl, beispielsweise ein auf Rollen verfahrbarer Bürostuhl, wobei die Antriebsvorrichtung 1 in zumindest einer der Rollen verbaut ist, lässt sich so in bekannter Weise verwenden. Soll dieser jedoch in eine vorgegebene Ausgangsstellung selbsttätig zurück verfahren, kann durch Zurückstellen des Kipphebels 300 in die Neutralstellung diese Funktion wieder eingestellt werden.

Schließlich zeigt Figur 5 die Stuhlaufnahme 12 aus den Figuren 3 und 4, jedoch mit dem Unterschied, dass anstelle eines Federmotors 7 eine Roll- oder Spiralfeder 3,4 gehäusefrei axial gelagert ist und mit dem Reib- oder Antriebsrad 14 über die Achse 17 kraftschluss- bzw. drehtechnisch verbunden ist. Wie auch das Reib- oder Antriebsrad 14 in den Figuren 3 und 4 weist dieses eine profilierte Mantelfläche auf, die beispielsweise in oder auf einem um das Reib- oder Antriebsrad 14 gelegten Reifen oder Gummiring ausgebildet sein kann. Die Profilierung und die Ausbildung der Mantelfläche als Reifen oder Gummiring dienen dabei vorteilhaft dazu, um einen möglichst guten Kontakt zwischen dem Reib- oder Antriebsrad 14 und dem Boden bzw. der Abstützvorrichtung 140 aufzubauen. Durch diese Ausgestaltung des Reib- oder Antriebsrads 14 soll sichergestellt werden, dass beim Verfahren des Stuhles 2, egal in welche Richtung, das Reib- oder Antriebsrad 14 nicht durchdreht Durch Verhindern eines Durchdrehens des Reib- oder Antriebsrads 14 kann sichergestellt werden, dass beim Verfahren des Stuhles 2 aus der Ausgangsposition A in Richtung der zu der Ausgangsposition unterschiedlichen Position E die für die Rückführung benötigte Rückstellkraft verlustfrei aufgebaut wird, und dass beim selbsttätigen Zurückfahren des Stuhles 2 aus der unterschiedlichen Position E in die Ausgangsposition A die Rückstellkraft und das dabei erzeugte Drehmoment vollständig Ober das Reib- oder Antriebsrad 14 auf den Boden oder die Abstützvorrichtung 140 übertragen werden kann. Es ist auch denkbar, die Konstantkraftfeder 3,4 oder den Federmotor 7 in dem Reib- oder Antriebsrad 14 zu integrieren, wobei beispielsweise das Reib- oder Antriebsrad 14 zwei Gehäuse bildet, wobei ein Gehäuse die Mantelfläche ist, das relativ zu dem anderen Gehäuse drehbar ist. Natürlich sind auch zumindest zwei oder mehr Reib- oder Antriebsräder 14 denkbar, die entweder auf einer Achse oder auf zwei oder mehr parallel zueinander liegenden Achsen, vorteilhaft relativ zueinander beabstandet, um einen besseren Halt zu bieten oder bei Unebenheiten im Boden sicherstellen zu können, dass zumindest immer ein Reib- oder Antriebsrad 14 Bodenkontakt hat, angeordnet sind.

Sämtliche hier gezeigten vorteilhaften Ausführungsformen einer Antriebsvorrichtung 1 können auch mit einem Freilauf 200, wie beispielsweise in Figur 2 gezeigt, kombiniert werden, wobei dieser unter anderem die Funktion des Kipp- oder Freistellhebels 300 ersetzen kann.

## Patentansprüche

1. Mechanische Antriebsvorrichtung (1) für einen verfahrbaren Stuhl (2), der aus einer Ausgangsposition A in Richtung einer zu der Ausgangsposition unterschiedlichen Position E verfahren werden kann, wobei beim Verfahren des Stuhles (2) die Antriebsvorrichtung (1) derart kraftbeaufschlagt wird, dass durch die Positionsänderung des Stuhles eine auf die Antriebsvorrichtung (1) wirkende Rückstellkraft aufgebaut wird, wobei die Rückstellkraft entgegen der Verfahrrichtung von der Ausgangsposition A in die unterschiedliche Position E wirkt, so dass mittels der auf die Antriebsvorrichtung (1) wirkenden Rückstellkraft der Stuhl (2) aus der unterschiedlichen Position E selbsttätig in die Ausgangsposition A zurück fährt, **dadurch gekennzeichnet, dass** die Antriebsvorrichtung (1) im Stuhl (2) verbaut ist.

2. Mechanische Antriebsvorrichtung (1) nach Anspruch 1, umfassend zumindest eine Konstantkraftfeder (3).

3. Mechanische Antriebsvorrichtung nach Anspruch 2, **dadurch gekennzeichnet, dass** die Konstantkraftfeder (3) als Spiral- oder Rollfeder (4) ausgebildet ist

4. Mechanische Antriebsvorrichtung nach einem der vorhergehenden Ansprüche, welche zumindest einen Spiralfeder- oder Rollfeder-Antrieb (6) umfasst.

5. Mechanische Antriebsvorrichtung nach Anspruch 4, umfassend zumindest eine Spiral- oder Rollfeder (4), die zwischen zwei Gehäusen hin und her bewegt werden kann.

6. Mechanische Antriebsvorrichtung nach Anspruch 6, **dadurch gekennzeichnet, dass** die Spiral- oder Rollfeder (4) in beiden Gehäusen eine unterschiedliche Krümmung aufweist.

7. Mechanische Antriebsvorrichtung nach einem der vorhergehenden Ansprüche, **dadurch gekennzeichnet, dass** beim Verfahren des Stuhls (2) aus der Ausgangsposition A in Richtung der zu der Ausgangsposition unterschiedlichen Position E durch Aufziehen der Feder (3,4) die Rückstellkraft zum Zurückfahren des Stuhls (2) aus der zu der Ausgangsposition unterschiedlichen Position E zurück in die Ausgangsposition aufgebaut wird.

8. Mechanische Antriebsvorrichtung (1) nach einem der vorhergehenden Ansprüche, welche einen Federmotor (7) umfasst, mit zumindest einer Federeinheit (8) mit einer Konstantkraftfeder (3,4), einer Federachse (9) und einer Federaufnahme (10), insbesondere welche in einem Gehäuse (11) aufgenommen sind.

9. Stuhl (2) mit einer mechanischen Antriebsvorrichtung (1) nach einem der vorhergehenden Ansprüche, umfassend zumindest eine Rolle oder zumindest ein Rad, **dadurch gekennzeichnet, dass** die Antriebsvorrichtung 1 in der Rolle oder dem Rad verbaut ist, oder mit der Rolle oder dem Rad zumindest form- und/oder kraftschlusstechnisch verbunden und entkoppelt werden kann.

10. Stuhl (2) mit einer mechanischen Antriebsvorrichtung (1) nach einem der Ansprüche 1 bis 8, umfassend zumindest eine Stuhlaufnahme (12) für eine Stuhlführungsvorrichtung (100), wobei die Stuhlaufnahme (12) entlang zumindest einer Linearführung (110, 120) geführt wird, **dadurch gekennzeichnet, dass** die Antriebsvorrichtung (1) in der Stuhlaufnahme (12) verbaut ist, oder mit der Stuhlaufnahme (12) zumindest form- und/oder kraftschlusstechnisch verbunden und entkoppelt werden kann.

11. Verwendung der mechanischen Antriebsvorrichtung (1) nach einem der Ansprüche 1 bis 8 in einem selbsttätig verfahrbaren Stuhl (2), insbesondere einem entlang einer Linearführung (110, 120) geführten Stuhl (2) oder in einem über zumindest eine Rolle oder zumindest ein Rad verfahrbaren Stuhl (2), aus einer zu einer Anfangsposition A unterschiedlichen Position E zurück in die Ausgangsposition A durch die auf die Antriebsvorrichtung (1) wirkende Rückstellkraft fährt, die durch Verfahren des Stuhles (2) aus der Ausgangsposition A in Richtung der zu der Ausgangsposition unterschiedlichen Position E über die Antriebsvorrichtung (1) aufgebaut wurde.
